# EUROPEAN PATENT SPECIFICATION

(11) **EP 4 269 210 B1**
(45) Date of publication and mention of the grant of the patent: **06.03.2024**
(21) Application number: 23169872.1
(22) Date of filing: 25.04.2023
(51) Int. Cl.: B62B 5/06, A01G 9/14, B62B 3/00

(54) **HANDLE BAR FOR A TUBE RAIL CART**
SCHIEBEGRIFF FÜR EINEN ROHRSCHIENENWAGEN
POIGNÉE POUR CHARIOT À TUYAUX FORMANT RAILS

(30) Priority: 28.04.2022 BE 202205312
(43) Date of publication of application: 01.11.2023
(73) Proprietor: B&A Automation BVBA, 2320 Hoogstraten (BE)
(72) Inventor: BOGAERTS, Joris, 2960 Brecht (BE)
(74) Representative: Archimedes Patents BVBA

(56) References cited:
- EP-A1- 2 633 751
- EP-A1- 3 259 982
- EP-A1- 3 682 728
- CN-A- 107 336 731
- CN-A- 110 810 333
- FR-A- 1 315 010
- US-B1- 6 616 580
- US-B1- 7 311 313

## Description

The present invention relates to a push bar for a tube rail cart.

In particular, the push bar of the invention is intended for a tube rail cart in a tube rail system as used in horticulture for cultivating and harvesting crops in greenhouses, such as flowers, tomatoes or the like.

Traditionally, in such cultivations, the crops are cultivated in parallel rows between which heating tubes are mounted.

Said heating tubes are also used as rails for moving the tube rail carts between the crops. The crops can be treated, pruned or harvested from these tube rail carts, either by workers or automatically.

Such tube rail carts are therefore often provided with all kinds of accessories such as leaf sliders for removing pruning waste, harvest bins or containers, a sprinkler system or the like.

Traditionally, said tube rail carts are provided with flanged wheels which allow the tube rail cart to ride both on the heating tubes and move forward on a fixed surface such as a concrete path or the like.

Traditionally said tube rail carts are provided with push bars at the front and back. Said push bars are intended to allow a user to push forward or pull backward the tube rail cart using their hip or hand.

When the tube rail carts are located on the heating tubes, said carts are often moved forward by the user by bumping against the push bar with their hip. Indeed, when moving forward on rails, the tube rail cart does not need to be steered in a certain direction. The user can push forward or pull backward the tube rail cart blindly as it were and spend all their attention on the tasks at hand.

Traditionally, said push bars consist of one or more folded tubes that are fixedly connected to the tube rail cart by means of bolted or welded joints.

In view of the considerable dead weight of such tube rail carts and the extra load, in the form of harvest, pruning waste and the like, which the tube rail cart must often transport, pushing forward or pulling backward the tube rail carts requires a lot of force of the user.

Repeatedly moving the tube rail cart using the hip which is pressed against the push bar causes pain and inconvenience for the user.

In some cases, this results in injuries in the form of bruises and hematomas.

Repeatedly moving the tube rail cart using the hand also causes excessive strain and injuries of the wrist.

Document US 7 311313 B1 discloses a push bar with the features of the preamble of claim 1. In this document a push bar in the form of an U-shaped adaptor is suited to be rigidly mounted to a stroller, whereby the arms of the U-shaped adaptor are provided with springs as shock absorbers.

The purpose of the present invention is to provide a solution to the aforementioned and other disadvantages.

To this end, the invention relates to a push bar for a tube rail cart, which is intended for pushing forward or pulling backward the tube rail cart by a user using their hip or hand whereby the push bar consists of two parts, namely a mounting part that can be rigidly connected to the tube rail cart and a contact part that is connected to the mounting part by means of a spring-loaded element, whereby the mounting part and the contact part are at least partially formed by hollow profiles, whereby the spring-loaded element under the influence of a force exercised by the user on the push bar, bends or elastically deforms from a free and unloaded resting position whereby no force is exercised on the push bar, to maximum an end position, whereby in said end position an end stop prevents the at least one spring-loaded element from bending or elastically deforming further and whereby the exercised force can be transferred to the tube rail cart without elastic effect, **whereby** the spring-loaded element comprises a spring and a stop element, whereby a first end of the stop element is slid into the hollow profile of the mounting part and a second end is slid into the hollow profile of the contact part, whereby the spring is mounted around the stop element, all this such that a first end of the spring presses against a free end of the hollow profile of the mounting part and a second end of the spring presses against a free end of the hollow profile of the contact part.

Consequently a tube rail cart provided with the push bar can be progressively set in motion when the user makes a bump or pull movement on the push bar.

Indeed, the spring-loaded element of the push bar according to the invention partially absorbs the exercised force on a tube rail cart and will bend or elastically deform.

An advantage is that the reaction force that the tube rail cart exercises on the user is much lower, such that the user no longer experiences pain when moving the tube rail cart.

Also when repeatedly moving the tube rail cart with the push bar according to the invention, bruises, hematomas or strained joints no longer occur because the exercised force is partly transposed into elastic energy.

The push bar according to the invention is thus very ergonomic and no longer causes injuries, such that the productivity of users increases.

The end stop ensures the push bar does not bend or elastic deform too far. Consequently the horizontal shift or angular rotation of the push bar relative to the tube rail cart remains limited, such that the user-friendliness increases.

Furthermore, the tube rail cart will start moving sooner when the end stop is reached.

The push bar essentially comprises two parts, namely a mounting part that is rigidly connected to the tube rail cart and a contact part that is connected to the mounting part by means of the spring-loaded element.

This has the advantage that less horizontal shift of the push bar occurs under the influence of the exercised force. A user has to push less far as it were before the end stop is reached.

According to a special aspect of the invention the line of force of the spring-loaded element does not coincide with the hinge line around which the spring-loaded element bends or elastically deforms. The eccentricity of said line of force and hinge line ensures a mechanical moment.

Preferably, the contact part is executed in a U-shape and is connected to the mounting part by means of two spring-loaded elements.

This ensures a handy push bar with a horizontal contact part that extends over the entire breadth of the tube rail cart. Consequently the user must never "look" for the contact part, but can move the tube rail cart blindly as it were with their hip or hand.

Preferably, a slide bushing is slid into the free ends of the hollow profiles, whereby every slide bushing comprises a hollow cylinder which is provided with a flange. The outer diameter of the cylinder is less than the inner diameter of the hollow profiles whereas the outer diameter of the flange is greater than the inner diameter of the hollow profiles, all this such that in mounted condition of the spring-loaded element and the slide bushings in the hollow profiles, the ends of the spring press against a side of the flange that is oriented away from the cylinder and the free ends of the hollow profiles press against a side of the flange that is oriented toward the cylinder.

Preferably, the contact part of the push bar is wholly or partly coated with an elastomer.

This has the advantage that the contact part is ergonomic. Indeed, the elastomer will be lightly pressed in and ensures moreover that the contact part does not feel cold and unpleasant.

In a preferred embodiment, the contact part is wholly or partly provided with a coating.

Said coating not only protects against the cold and an unpleasant feel of the contact part, but also ensures an extra anti-corrosion protection.

Preferably, the stop element is formed such that when the spring-loaded element is located in the resting position, the stop element is resting partially against an inner wall of the hollow profiles or against an inner wall of the slide bushings.

This has the advantage that the spring-loaded element cannot bend under the influence of pull movements. As a result of this the tube rail cart reacts immediately when the push bar is pulled and consequently the tube rail cart is easier to manoeuvre when pulled. In such pull movement there is no risk of injuries as occurs with a push or bump movement.

It is clear that a pull movement is oriented away from the tube rail cart and that a push or bump movement is oriented in the direction of the tube rail cart.

With the intention of better showing the characteristics of the invention, a preferred embodiment of a spring-loaded push bar according to the invention is described hereinafter, by way of an example, with reference to the accompanying drawings wherein:
figure 1 schematically shows a perspective view of a tube rail cart equipped with spring-loaded push bars according to the invention;
figure 2 shows the spring-loaded push bar indicated in figure 1 with the arrow F2;
figure 3 shows the different components of a spring-loaded element;
figure 4 shows a cross-section of a section of figure 2 according to line IV-IV, in a free and unloaded resting position;
figure 5 shows the cross-section of figure 4, in an end position.

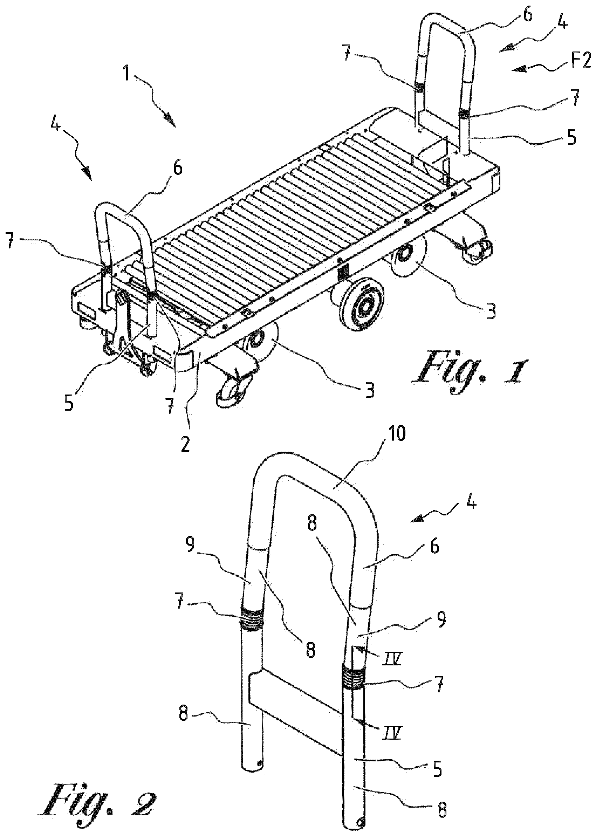

Figure 1 schematically shows a tube rail cart 1 which comprises a chassis 2 with flanged wheels 3. In this case, but not necessarily, both end faces of the tube rail cart 1 are provided with a spring-loaded push bar 4.

The spring-loaded push bars 4 are intended for pushing forward or pulling backward the tube rail cart 1 by a user using their hip or hand.

The spring-loaded push bars 4 consist of a mounting part 5 that is rigidly connected to the tube rail cart 1 and a contact part 6 that is connected to the mounting part 5 by means of two spring-loaded elements 7. This can clearly be seen in figure 2.

The mounting part 5 and the contact part 6 are essentially made of hollow profiles 8, in this case aluminium tubes 8, although said parts could also be manufactured from tubular profiles or the like. Metals other than aluminium or even synthetic material are not unthinkable.

The contact part 6 is in this case, but not necessarily for the invention, partially provided with a coating 9 and partially provided with an elastomer 10.

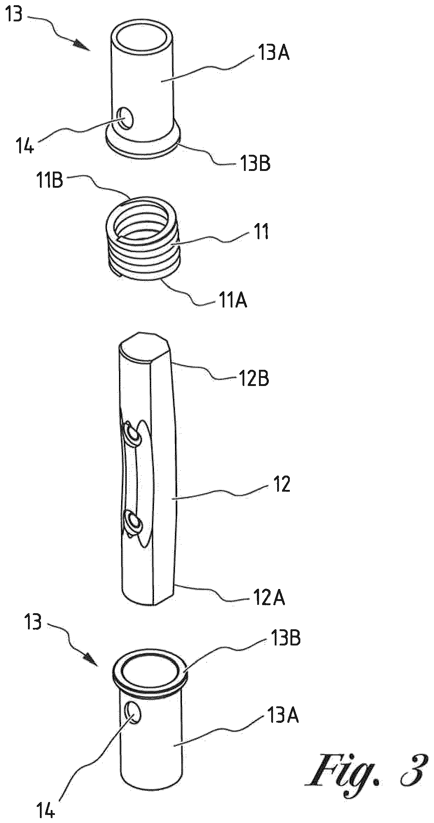

Figure 3 clearly shows the separate components of the spring-loaded element 7. In this embodiment the spring-loaded element 7 comprises: a spring 11, a stop element 12 and two slide bushings 13.

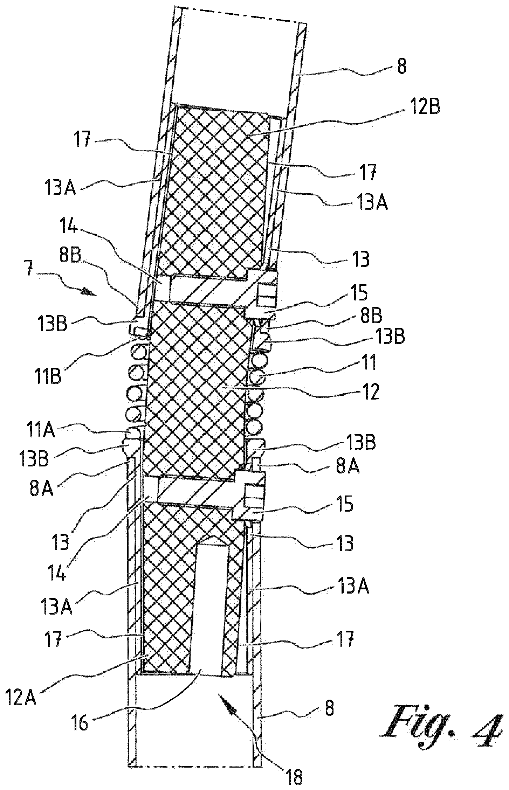

The cross-section shown in figure 4 shows how the spring-loaded element 7 forms a connection between the mounting part 5 and the contact part 6.

In this cross-section it is clear that one slide bushing 13 is mounted in the free end 8A of the tube 8 of the mounting part 5 and one slide bushing 13 is mounted in the free end 8B of the tube 8 of the contact part 6.

Each slide bushing 13 comprises a hollow cylinder 13A and a flange 13B. In this embodiment the outer diameter of the cylinder 13A is less than the inner diameter of the hollow profiles 8 whereas the outer diameter of the flange 13B is greater than the inner diameter of the hollow profiles 8. On the one hand, one end 12A of the stop element 12 is slid into the slide bushing 13 of the mounting part 5 and on the other hand, its other end 12B is slid into the slide bushing 13 of the contact part 6.

In this case, the spring 11 is a compression spring and is mounted around the stop element 12. In mounted condition of the spring-loaded element 7 and the slide bushings 13 in the hollow profiles 8, the ends 11A, 11B of the spring 11 press against a side of the flange 13B that is oriented away from the cylinder 13A whereas the free ends 8A, 8B of the hollow profiles 8 or tubes 8 press against a side of the flange 13B oriented toward the cylinder 13A.

It is understood that in the absence of the slide bushings 13, the ends 11A, 11B of the spring 11 press against the free ends 8A, 8B of the hollow profiles 8 or tubes 8.

Said stop element 12 may be a rigid element or be made from a light elastic or shock-absorbing material. Preferably, the elasticity of the stop element 12 is in any case lower than the elasticity of the spring 11.

In this embodiment, the first end 12A of the stop element 12 is mounted to the mounting part 5 and the second end 12B is mounted to the contact part 6, all this such that a translation of the stop element 12 in the hollow profiles 8 is prevented but the spring 11 is able to bend, in the direction perpendicular to the axis of the spring 11.

In this embodiment the spring 11 is a compression spring which is prestressed and mounted between the flanges 13A, 13B of the slide bushings 13. Said prestressing of the spring 11 ensures that the axes of the hollow profiles 8 of the mounting part 5 and contact part 6 are located in the resting position at an angle. The smallest included angle between the aforementioned axes is 7° in this embodiment. Preferably, said angle is less than 45°, more preferably less than 25° and ideally less than 10°.

Said angle between the aforementioned axes is restricted by the stop element 12 in the resting position. Without the stop element 12 the smallest included angle would be considerably greater. Indeed, figure 4 shows that the stop element 12 is in contact with an inner wall of both the slide bushing 13 of the mounting part 5 and the slide bushing of the contact part 6.

The aforementioned angle in the resting position also ensures that the contact part 6 is partially located outside the contours of the tube rail cart 1. In this way, the contact part 6 is more easily accessible by hip or hand.

In this case it is also clearly visible in figure 4 that the ends of the mounting part 5 and the contact part 6 are connected to the slide bushings 13 and the stop element 12 by means of screw connections 15. In this embodiment the position of said screw connections 15 forms the hinge points around which the contact part 6 can hinge as it were.

In case of a pull movement, oriented away from the tube rail cart 1, on the contact part 6, the stop element 12 prevents the spring 11 from bending in a direction away from the tube rail cart 1 and consequently the tube rail cart 1 is immediately set in motion.

The geometry of the stop element 12 determines the range of movement of the spring-loaded element 7. In this example, said range of movement depends on the direction, but this is not necessary and may depend on the chosen application.

It is understood that in the absence of the slide bushings 13, in that case the stop element 12 rests partially against an inner wall of the hollow profiles 8.

Figure 4 also shows a threaded hole 16 in the stop element 12 that is intended during assembly to adjust the spring-loaded element 7 to the desired stress using a threaded rod, which is not shown here.

However, adjusting the spring-loaded element 7 to the desired stress can be done in all kinds of way, for example by using a mould or the like.

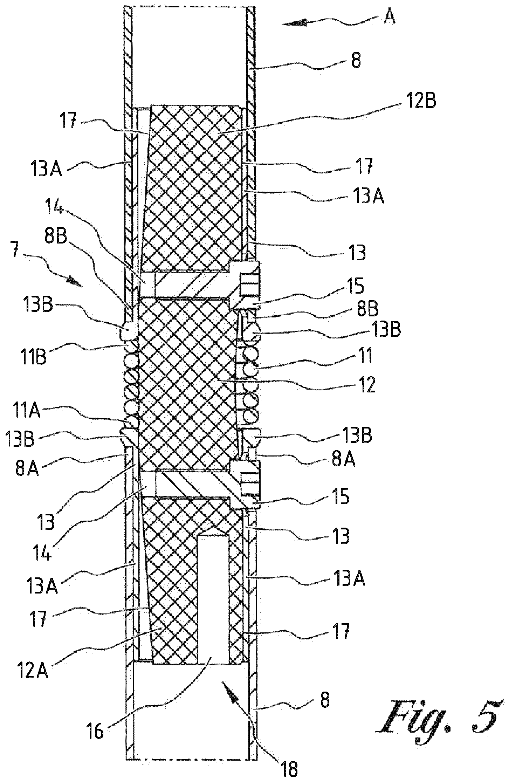

Figure 5 shows the spring-loaded element 7 in the end position, whereby the contact part 6 is pushed or bumped or force is exerted thereon. The direction of the force vector is to the left in this figure, in the direction of the arrow A.

The spring 11 is essentially straight in this end position. In this case the axis of the hollow profile 8 of the mounting part 5 and the axis of the hollow profile 8 of the contact part 6 extend essentially coaxially.

A further bending of the spring 11 is prevented by the stop element 12. Indeed, in this figure it is also clear that an end stop 17 of the stop element 12 presses against the inner wall of the slide bushings 13A, 13B. Said end stops 17 prevent further bending of the spring 11 in the end position.

The operation of a tube rail cart 1 equipped with one or two spring-loaded push bars 4 is very simple and as follows.

When a user wants to move the tube rail cart 1 forward he exercises a force on, or bumps, the contact part 6 of the push bar 4, in the direction of the tube rail cart 1.

The spring 11 bends from a free and unloaded position and absorbs a part of the energy coming from the exercised force or bump.

If the exercised force or bump is big enough, the spring 11 bends to maximum an end position whereby an end stop 17 is reached and the spring 11 cannot bend further.

The exercised force is consequently transferred to the tube rail cart 1 without elastic effect and starts moving. When the user subsequently wishes to move the tube rail cart 1 backward, he again exercises a force on the contact part 6 of the push bar 4, but this time a pull instead of a bump. It is understood that the direction of the force vector of said pull is oriented away from the tube rail cart 1.

The spring 11 does not bend under the influence of a pull. Indeed, in the resting position the stop element 12 is resting partially against the inner wall of the slide bushings 13 such that as if the end stop 17 is immediately reached the event of a pull.

As a result of this, the tube rail cart 1 immediately moves under the influence of a pull, which simplifies manoeuvring.

It is understood that the spring-loaded element 7 can be realised in all kinds of different ways such as, for example, a torsion spring or the like.

For a person skilled in the art it is clear that the axis of the hollow profiles 8 of the mounting part 5 and the axis of the hollow profiles of the contact part 6 could also extend coaxially in the resting position and form an angle in the end position. Such configuration would mean that figure 5 shows the spring-loaded element 7 in the resting position and figure 4 shows the spring-loaded element 7 in the end position.

The present invention is by no means limited to the embodiments described as an example and shown in the figures, but a spring-loaded push bar according to the invention can be realised in all kinds of forms and dimensions as long as they remain within the scope of the invention as defined in the claims.

## Claims

1. Push bar for a tube rail cart, whereby the push bar (4) is intended for pushing forward or pulling backward the tube rail cart (1) by a user using their hip or hand whereby the push bar (4) consists of two parts, namely a mounting part (5) that can be rigidly connected to the tube rail cart (1) and a contact part (6) that is connected to the mounting part (5) by means of a spring-loaded element (7), whereby the mounting part (5) and the contact part (6) are at least partially formed by hollow profiles (8), whereby the spring-loaded element (7) under the influence of a force exercised by the user on the push bar (4), bends or elastically deforms from a free and unloaded resting position whereby no force is exercised on the push bar (4), to maximum an end position, whereby in said end position an end stop (17) prevents the at least one spring-loaded element (7) from bending or elastically deforming further and whereby the exercised force can be transferred to the tube rail cart (1) without elastic effect, **characterised in that** the spring-loaded element (7) comprises a spring (11) and a stop element (12), whereby a first end (12A) of the stop element (12) is slid into the hollow profile (8) of the mounting part (5) and a second end (12B) is slid into the hollow profile (8) of the contact part (6), whereby the spring (11) is mounted around the stop element (12), all this such that a first end (11A) of the spring (11) presses against a free end (8A) of the hollow profile (8) of the mounting part (5) and a second end (11B) of the spring (11) presses against a free end (8B) of the hollow profile (8) of the contact part (6).

2. Push bar according to claim 1, **characterised in that** the first end (12A) of the stop element (12) is mounted to the mounting part (5) and the second end (12B) is mounted to the contact part (6), all this such that a translation of the stop element (12) in the hollow profiles (8) is prevented but the spring (11) is able to bend, in the direction perpendicular to the axis of the spring (11).

3. Push bar according to any one of the previous claims, **characterised in that** the hollow profiles (8) are formed by tubes (8) and/or pipes.

4. Push bar according to any one of the previous claims, **characterised in that** the spring (11) is a compression spring, which is prestressed in the resting position of the mounted condition.

5. Push bar according to any one of the previous claims, **characterised in that** in the free ends (8A, 8B) of the hollow profiles (8) a slide bushing (13) is slid, whereby each slide bushing comprises (13) a hollow cylinder (13A) that is provided with a flange (13B), whereby the outer diameter of the cylinder (13A) is less than the inner diameter of the hollow profiles (8) and whereby the outer diameter of the flange (13B) is greater than the inner diameter of the hollow profiles (8), all this such that in mounted condition of the spring-loaded element (7) and the slide bushings (13) in the hollow profiles (8), the ends (11A, 11B) of the spring (11) press against a side of the flange (13B) oriented away from the cylinder (13A) and the free ends (8A, 8B) of the hollow profiles (8) press against a side of the flange (13B) oriented toward the cylinder (13A) .

6. Push bar according to any one of the previous claims, **characterised in that** the ends (8A, 8B) of the profiles (8) of the mounting part (5) and the contact part (6) are connected to the stop element (12) by means of a bolted or a screw connection (15).

7. Push bar according to claim 6, **characterised in that** the cylinders (13A) of the slide bushings (13) are provided with a perforation (14) for the bolted or screw connection (15) .

8. Push bar according to any one of the previous claims, **characterised in that** the contact part (6) is connected to the mounting part (5) by means of two spring-loaded elements (7).

9. Push bar according to claim 8, **characterised in that** the contact part (6) is executed as a U-shape, whereby each free end of said U-shape is connected to a spring-loaded element (7).

10. Push bar according to any one of the previous claims, **characterised in that** in the resting position the smallest included angle between the axis of the hollow profiles (8) of the mounting part (5) and the axis of the hollow profiles (8) of the contact part (6) is less than 45°, preferably less than 25°, ideally less than 10°.

11. Push bar according to any one of the previous claims, **characterised in that** at least the contact part (6) of the push bar (4) is wholly or partly coated with an elastomer (10) or is provided with a coating (9).

12. Push bar according to any one of the previous claims, **characterised in that** the stop element (12) is formed such that when the spring-loaded element (7) is located in the resting position and/or end position, the stop element (12) is partially resting or pressing against an inner wall of the hollow profiles (8) and/or against an inner wall of the slide bushings (13).

13. Push bar according to any one of the previous claims, **characterised in that** the spring-loaded element (7) is provided with means (18) for stressing the spring-loaded element (7) during assembly.

14. Push bar according to claim 13, **characterised in that** the means (18) for stressing the spring-loaded element (7) are executed as a threaded hole (16) in an end face of the stop element (12) for screwing in a threaded rod, all this such that a rotation of the threaded rod results in a translation of the stop element in the hollow profiles (8).

15. Tube rail cart (1) **characterised in that** it comprises at least one spring-loaded push bar (4) according to any one of the previous claims.

## Patentansprüche

1. Lenker zum Manövrieren für einen Rohrschienenwagen, wobei der Lenker zum Manövrieren (4) dazu bestimmt ist, von einem Benutzer mit der Hüfte oder der Hand den Rohrschienenwagen (1) vorwärts zu schieben oder rückwärts zu ziehen, wobei der Lenker zum Manövrieren (4) aus zwei Teilen besteht, nämlich einem starr mit dem Rohrschienenwagen (1) verbindbaren Montageteil (5) und einem mit dem Montageteil (5) mittels eines federbelasteten Elements (7) verbundenen Kontaktteil (6), wobei das Montageteil (5) und das Kontaktteil (6) zumindest teilweise durch Hohlprofile (8) gebildet sind, wobei das federbelastete Element (7) unter dem Einfluss einer vom Benutzer auf den Lenker zum Manövrieren (4) ausgeübten Kraft sich aus einer freien und unbelasteten Ruheposition, in der keine Kraft auf den Lenker zum Manövrieren (4) ausgeübt wird, bis maximal zu einer Endposition biegt oder elastisch verformt, wobei in dieser Endposition ein Endanschlag (17) verhindert, dass das mindestens eine federbelastete Element (7) sich weiter verbiegt oder elastisch verformt, und wobei die ausgeübte Kraft ohne elastische Wirkung auf den Rohrschienenwagen (1) übertragen werden kann, **dadurch gekennzeichnet, dass** das federbelastete Element (7) eine Feder (11) und ein Anschlagelement (12) umfasst, wobei ein erstes Ende (12A) des Anschlagelements (12) in das Hohlprofil (8) des Montageteils (5) und ein zweites Ende (12B) in das Hohlprofil (8) des Kontaktteils (6) geschoben wird, wobei die Feder (11) um das Anschlagelement (12) herum montiert ist, all dies so, dass ein erstes Ende (1 1A) der Feder (11) gegen ein freies Ende (8A) des Hohlprofils (8) des Montageteils (5) und ein zweites Ende (11B) der Feder (11) gegen ein freies Ende (8B) des Hohlprofils (8) des Kontaktteils (6) drückt.

2. Lenker zum Manövrieren nach Anspruch 1, **dadurch gekennzeichnet, dass** das erste Ende (12A) des Anschlagelements (12) an dem Montageteil (5) und das zweite Ende (12B) an dem Kontaktteil (6) montiert ist, all dies so, dass eine Translation des Anschlagelements (12) in den Hohlprofilen (8) verhindert wird, die Feder (11) sich jedoch in der Richtung senkrecht zur Achse der Feder (11) biegen kann.

3. Lenker zum Manövrieren nach einem der vorhergehenden Ansprüche, **dadurch gekennzeichnet, dass** die Hohlprofile (8) durch Rohre (8) und/oder Leitungen gebildet sind.

4. Lenker zum Manövrieren nach einem der vorhergehenden Ansprüche, **dadurch gekennzeichnet, dass** die Feder (11) eine Druckfeder ist, die in der Ruhestellung des montierten Zustandes vorgespannt ist.

5. Lenker zum Manövrieren nach einem der vorhergehenden Ansprüche, **dadurch gekennzeichnet, dass** in die freien Enden (8A, 8B) der Hohlprofile (8) eine Gleitbuchse (13) eingeschoben ist, wobei jede Gleitbuchse (13) einen Hohlzylinder (13A) umfasst, der mit einem Flansch (13B) versehen ist, wobei der Außendurchmesser des Zylinders (13A) kleiner als der Innendurchmesser der Hohlprofile (8) ist und wobei der Außendurchmesser des Flansches (13B) größer als der Innendurchmesser der Hohlprofile (8) ist, wobei der Außendurchmesser des Flansches (13B) größer ist als der Innendurchmesser der Hohlprofile (8), all dies so, dass in dem montierten Zustand des federbelasteten Elements (7) und der Gleitbuchsen (13) in den Hohlprofilen (8) die Enden (11A, 11B) der Feder (11) gegen eine dem Zylinder (13A) abgewandte Seite des Flansches (13B) drücken und die freien Enden (8A, 8B) der Hohlprofile (8) gegen eine dem Zylinder (13A) zugewandte Seite des Flansches (13B) drücken.

6. Lenker zum Manövrieren nach einem der vorhergehenden Ansprüche, **dadurch gekennzeichnet, dass** die Enden (8A, 8B) der Profile (8) des Montageteils (5) und des Kontaktteils (6) mit dem Anschlagelement (12) mittels einer Bolzen- oder Schraubverbindung (15) verbunden sind.

7. Lenker zum Manövrieren nach Anspruch 6, **dadurch gekennzeichnet, dass** die Zylinder (13A) der Gleitbuchsen (13) mit einer Durchbohrung (14) für die Bolzen- oder Schraubverbindung (15) versehen sind.

8. Lenker zum Manövrieren nach einem der vorhergehenden Ansprüche, **dadurch gekennzeichnet, dass** das Kontaktteil (6) anhand von zwei federbelasteten Elementen (7) mit dem Montageteil (5) verbunden ist.

9. Lenker zum Manövrieren nach Anspruch 8, **dadurch gekennzeichnet, dass** das Kontaktteil (6) U-förmig ausgebildet ist, wobei jedes freie Ende der U-Form mit einem federbelasteten Element (7) verbunden ist.

10. Lenker zum Manövrieren nach einem der vorhergehenden Ansprüche, **dadurch gekennzeichnet, dass** in der Ruhestellung der kleinste eingeschlossene Winkel zwischen der Achse der Hohlprofile (8) des Montageteils (5) und der Achse der Hohlprofile (8) des Kontaktteils (6) weniger als 45°, vorzugsweise weniger als 25°, idealerweise weniger als 10° beträgt.

11. Lenker zum Manövrieren nach einem der vorhergehenden Ansprüche, **dadurch gekennzeichnet, dass** zumindest das Kontaktteil (6) des Lenkers zum Manövrieren (4) ganz oder teilweise mit einem Elastomer (10) beschichtet ist oder mit einer Beschichtung (9) versehen ist.

12. Lenker zum Manövrieren nach einem der vorhergehenden Ansprüche, **dadurch gekennzeichnet, dass**, wenn das federbelastete Element (7) sich in der Ruheposition und/oder Endposition befindet, das Anschlagelement (12) so ausgebildet ist, dass das Anschlagelement (12) teilweise an einer Innenwand der Hohlprofile (8) und/oder an einer Innenwand der Gleitbuchsen (13) anliegt oder drückt.

13. Lenker zum Manövrieren nach einem der vorhergehenden Ansprüche, **dadurch gekennzeichnet, dass** das federbelastete Element (7) mit Mitteln (18) zum Verspannen des federbelasteten Elements (7) bei der Montage versehen ist.

14. Lenker zum Manövrieren nach Anspruch 13, **dadurch gekennzeichnet, dass** die Mittel (18) zum Verspannen des federbelasteten Elements (7) als eine Gewindebohrung (16) in einer Stirnseite des Anschlagelements (12) zum Einschrauben einer Schraubenstange ausgeführt sind, all dies so, dass eine Drehung der Schraubenstange eine Translation des Anschlagelements in den Hohlprofilen (8) bewirkt.

15. Rohrschienenwagen (1), **dadurch gekennzeichnet, dass** er mindestens einen federbelasteten Lenker zum Manövrieren (4) nach einem der vorhergehenden Ansprüche aufweist.

## Revendications

1. Guidon de manoeuvre pour un chariot sur rail tubulaire, dans lequel le guidon de manoeuvre est destiné à pousser vers l'avant ou à tirer vers l'arrière le chariot sur rail tubulaire grâce à l'intervention d'un utilisateur qui utilise ses hanches ou ses mains, dans lequel le guidon de manoeuvre (4) est constitué par deux parties, plus précisément une partie de montage (5) qui peut être reliée de manière rigide au chariot sur rail tubulaire (1) et une partie de contact (6) qui est reliée à la partie de montage (5) au moyen d'un élément (7) chargé par ressort, dans lequel la partie de montage (5) et la partie de contact (6) sont réalisées au moins en partie par l'intermédiaire de profilés creux (8), dans lequel l'élément (7) chargé par ressort, sous l'influence d'une force exercée par l'utilisateur sur le guidon de manoeuvre (4), donne lieu à un fléchissement ou une déformation élastique à partir d'une position de repos libre et non chargée dans laquelle aucune force ne s'exerce sur le guidon de manoeuvre (4), jusqu'à, au maximum, une position terminale, dans lequel, dans ladite position terminale, une butée d'extrémité (17) empêche ledit au moins un élément (7) chargé par ressort de fléchir ou de se déformer davantage d'une manière élastique, et dans lequel la force exercée peut être transférée au chariot sur rail tubulaire (1) en l'absence d'un effet élastique, **caractérisé en ce que** l'élément (7) chargé par ressort comprend un ressort (11) et un élément de butée (12), dans lequel on fait coulisser une première extrémité (12A) de l'élément de butée (12) dans le profilé creux (8) de la partie de montage (5) et on fait coulisser une deuxième extrémité (12B) dans le profilé creux (8) de la partie de contact (6), dans lequel le ressort (11) est monté autour de l'élément de butée (12), tout ceci d'une manière telle qu'une première extrémité (11A) du ressort (11) exerce une pression sur une première extrémité (8A) du profilé creux (8) de la partie de montage (5) et une deuxième extrémité (11B) du ressort (11) exerce une pression sur une extrémité libre (8B) du profilé creux (8) de la partie de contact (6).

2. Guidon de manoeuvre selon la revendication 1, **caractérisé en ce que** la première extrémité (12A) de l'élément de butée (12) est montée sur la partie de montage (5) et la deuxième extrémité (12B) est montée sur la partie de contact (6), tout ceci d'une manière telle que l'on empêche une translation de l'élément de butée (12) dans les profilés creux (8), alors que le ressort (11) est capable de fléchir dans la direction perpendiculaire à l'axe du ressort (11).

3. Guidon de manoeuvre selon l'une quelconque des revendications précédentes, **caractérisé en ce que** les profilés creux (8) sont réalisés par l'intermédiaire de tubes (8) et/ou de tuyaux.

4. Guidon de manoeuvre selon l'une quelconque des revendications précédentes, **caractérisé en ce que** le ressort (11) est un ressort de compression qui est mis en état de précontrainte dans la position de repos de l'état monté.

5. Guidon de manoeuvre selon l'une quelconque des revendications précédentes, **caractérisé en ce que**, dans les extrémités libres (8A, 8B) des profilés creux (8), on fait coulisser une douille coulissante (13), dans lequel chaque douille coulissante (13) comprend un cylindre creux (13A) qui est muni d'une bride (13B), dans lequel le diamètre externe du cylindre (13A) est inférieur au diamètre interne des profilés creux (8), et dans lequel le diamètre externe de la bride (13B) est supérieur au diamètre interne des profilés creux (8), tout ceci d'une manière telle que, à l'état monté de l'élément (7) chargé par ressort et des douilles coulissantes (13) dans les profilés creux (8), les extrémités (11A, 11B) du ressort (11) exercent une pression sur un côté de la bride (13B) qui est orienté en se détournant du cylindre (13A) et les extrémités libres (8A, 8B) des profilés creux (8) exercent une pression sur un côté de la bride (13B) est orienté dans la direction du cylindre (13A).

6. Guidon de manoeuvre selon l'une quelconque des revendications précédentes, **caractérisé en ce que** les extrémités (8A, 8B) des profilés (8) de la partie de montage (5) et de la partie de contact (6) sont reliées à l'élément de butée (12) au moyen d'une liaison boulonnée ou d'une liaison à vis (15).

7. Guidon de manoeuvre selon la revendication 6, **caractérisé en ce que** les cylindres (13A) des douilles coulissantes (13) sont munis d'une perforation (14) pour la liaison boulonnée ou à vis (15).

8. Guidon de manoeuvre selon l'une quelconque des revendications précédentes, **caractérisé en ce que** la partie de contact (6) est reliée à la partie de montage (5) au moyen de deux éléments (7) chargés par ressorts.

9. Guidon de manoeuvre selon la revendication 8, **caractérisé en ce que** la partie de contact (6) est réalisée avec une configuration en forme de U, dans lequel chaque extrémité libre de ladite configuration en forme de U est reliée à un élément (7) chargé par ressort.

10. Guidon de manoeuvre selon l'une quelconque des revendications précédentes, **caractérisé en ce que**, dans la position de repos, le plus petit angle inclus entre l'axe des profilés creux (8) de la partie de montage (5) et l'axe des profilés creux (8) de la partie de contact (6) est inférieur à 45°, de préférence inférieur à 25°, idéalement inférieur à 10°.

11. Guidon de manoeuvre selon l'une quelconque des revendications précédentes, **caractérisé en ce qu'**au moins une partie de contact (6) du guidon de manoeuvre (4) est enduit, en tout ou en partie, d'un élastomère (10) ou est muni d'un revêtement (9).

12. Guidon de manoeuvre selon l'une quelconque des revendications précédentes, **caractérisé en ce que** l'élément de butée (12) est réalisé de manière telle que, lorsque l'élément (7) chargé par un ressort se trouve dans la position de repos/ou dans la position terminale, l'élément de butée (12) s'appuie ou exerce une pression de manière partielle contre une paroi interne des profilés creux (8) et/ou contre une paroi interne des douilles coulissantes (13).

13. Guidon de manoeuvre selon l'une quelconque des revendications précédentes, **caractérisé en ce que** l'élément (7) chargé par un ressort est équipé de moyens (18) destinés à la mise en état de contrainte de l'élément (7) chargé par un ressort au cours du montage.

14. Guidon de manoeuvre selon la revendication 13, **caractérisé en ce que** les moyens (18) destinés à la mise en état de contrainte de l'élément (7) chargé par un ressort sont réalisés sous la forme d'un alésage taraudé (16) dans une face terminale de l'élément de butée (12) pour que l'on puisse y introduire par vissage une tige filetée, tout ceci d'une manière telle une rotation de la tige filetée donne lieu à une translation de l'élément d'arrêt dans les profilés creux (8).

15. Chariot sur rail tubulaire (1) **caractérisé en ce qu'**il comprend au moins un guidon de manoeuvre (4) chargé par un ressort en conformité avec l'une quelconque des revendications précédentes.
